(19) Europäisches Patentamt
European Patent Office
Office européen des brevets

(11) **EP 4 560 037 A1**

(12) **EUROPEAN PATENT APPLICATION**
published in accordance with Art. 153(4) EPC

(43) Date of publication:
**28.05.2025 Bulletin 2025/22**

(21) Application number: **23859900.5**

(22) Date of filing: **25.07.2023**

(51) International Patent Classification (IPC):
*C22C 38/00* (2006.01)      *C21D 9/46* (2006.01)
*C22C 38/06* (2006.01)      *C22C 38/60* (2006.01)

(52) Cooperative Patent Classification (CPC):
**C21D 9/46; C22C 38/00; C22C 38/06; C22C 38/60**

(86) International application number:
**PCT/JP2023/027130**

(87) International publication number:
**WO 2024/048131 (07.03.2024 Gazette 2024/10)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **29.08.2022 JP 2022135938**

(71) Applicant: **JFE Steel Corporation
Tokyo 100-0011 (JP)**

(72) Inventors:
• **YANG, Lingling
  Tokyo 100-0011 (JP)**
• **TOJI, Yuki
  Tokyo 100-0011 (JP)**

(74) Representative: **Hoffmann Eitle
Patent- und Rechtsanwälte PartmbB
Arabellastraße 30
81925 München (DE)**

(54) **HIGH-STRENGTH GALVANIZED STEEL SHEET, METHOD FOR MANUFACTURING SAME, MEMBER, AND METHOD FOR MANUFACTURING SAME**

(57)    Provided is a high strength galvanized steel sheet having a yield strength of not less than 1,000 MPa and having excellent workability, collision proof stress, and crack stopping property. An amount of diffusible hydrogen in steel of the steel sheet is not more than 0.60 mass ppm. The chemical composition of the steel sheet includes, by mass%, C: 0.150 to 0.450%, Si: 0.50 to 3.00%, Mn: 1.50 to 4.00%, P: not more than 0.100%, S: not more than 0.0200%, Al: not more than 0.100%, O: not more than 0.0100%, and N: not more than 0.0100%, with a balance being Fe and inevitable impurities. In the microstructure of the steel sheet, a total area fraction of tempered martensite and bainite is 55 to 95%, an area fraction of retained austenite is 5 to 30%, and a presence ratio X/Y of a structure X having a nanohardness of 7.0 GPa or more to a structure Y having a nanohardness of 6.5 GPa or less is 0.5 to 2.5.

FIG. 1

EP 4 560 037 A1

**Description**

TECHNICAL FIELD

The invention relates to a high strength galvanized steel sheet having a yield strength (YS) of not less than 1,000 MPa and a method of producing the same as well as a member and a method of producing the same.

BACKGROUND ART

In recent years, in the automotive industry for example, an improvement in the fuel efficiency of automobiles has been hoped for to reduce the carbon dioxide gas ($CO_2$) emission from a viewpoint of the preservation of the global environment.

In order to improve the fuel efficiency of automobiles, it is effective to reduce the vehicle body weight, and in this case, it is necessary to reduce the vehicle body weight while maintaining the strength of the vehicle body. If the number of automotive parts can be reduced by strengthening a steel sheet which becomes the parts and simplifying the structure of the vehicle body, reduction of the vehicle body weight can be achieved.

For example, Patent Literature 1 discloses high strength galvanized steel sheets including those having a yield strength of not less than 1,000 MPa.

CITATION LIST

PATENT LITERATURE

Patent Literature 1: WO 2017/164346

SUMMARY OF INVENTION

TECHNICAL PROBLEMS

To form a high strength galvanized steel sheet having a yield strength of not less than 1,000 MPa into automotive parts, good workability is required.

Further, a steel sheet used as automotive parts is also required to be excellent in terms of proof stress at a collision (hereinafter, referred to as "collision proof stress") and to suppress the growth of a crack generated due to an external force at a collision (i.e., to be excellent in a crack stopping property).

Therefore, the present invention aims at providing a high strength galvanized steel sheet having a yield strength of not less than 1,000 MPa and also having excellent workability, collision proof stress, and crack stopping property.

SOLUTION TO PROBLEMS

The present inventors found that employing the configuration described below enables the achievement of the above-mentioned object. The invention has been thus completed.

Specifically, the present invention provides the following [1] to [5].

[1] A high strength galvanized steel sheet comprising a steel sheet, and a galvanizing layer disposed on at least one surface of the steel sheet, wherein a yield strength is not less than 1,000 MPa, an amount of diffusible hydrogen in steel of the steel sheet is not more than 0.60 mass ppm, the steel sheet has chemical composition and microstructure, the chemical composition including, by mass, C in an amount of 0.150 to 0.450%, Si in an amount of 0.50 to 3.00%, Mn in an amount of 1.50 to 4.00%, P in an amount of not more than 0.100%, S in an amount of not more than 0.0200%, Al in an amount of not more than 0.100%, O in an amount of not more than 0.0100%, and N in an amount of not more than 0.0100%, with a balance being Fe and inevitable impurities, in the microstructure, a total area fraction of tempered martensite and bainite is 55 to 95%, an area fraction of retained austenite is 5 to 30%, and a presence ratio X/Y of a structure X to a structure Y is 0.5 to 2.5, the structure X having a nanohardness of 7.0 GPa or more, and the structure Y having a nanohardness of 6.5 GPa or less.

[2] The high strength galvanized steel sheet according to [1], wherein the chemical composition further includes at least one element selected from the group consisting of, by mass, B in an amount of not more than 0.0100%, Ti in an amount of not more than 0.200%, Nb in an amount of not more than 0.200%, V in an amount of not more than 0.200%, W in an amount of not more than 0.100%, Mo in an amount of not more than 1.000%, Cr in an amount of not more than 1.000%, Sb in an amount of not more than 0.200%, Sn in an amount of not more than 0.200%, Zr in an amount of not more than 0.1000%, Te in an amount of not more than 0.100%, Cu in an amount of not more than 1.000%, Ni in an amount of not more than 1.000%, Ca in an amount of not more than 0.0100%, Mg in an amount of not more than 0.0100%, REM in an amount of not more than 0.0100%; Co in an amount of not more than 0.010%, Ta in an amount of not more than 0.10%, Hf in an amount of not more than 0.10%, and Bi in an amount of not more than 0.200%.

[3] A method of producing the high strength galvanized steel sheet according to [1] or [2], the method comprising: subjecting a steel slab having the chemical composition according to [1] or [2] to hot rolling to obtain a hot rolled steel sheet; subjecting the hot rolled steel sheet to cold rolling to obtain a cold rolled steel sheet; subjecting the cold rolled steel sheet to a heat treatment, first cooling, second cooling, and a galvanizing treatment in this order to obtain a galvanized steel sheet; and subjecting the galvanized steel sheet to third cooling, a re-heat treatment, and fourth cooling in this order; wherein in the heat treatment, the cold rolled steel sheet is heated at a heating temperature T1 of 800°C to 950°C, in the first cooling, the cold rolled steel sheet is cooled from the heating temperature T1 to a temperature T2 not lower than (Ms point + 100) °C and not higher than (Ms point + 600) °C at an average cooling rate $v_1$ of not lower than 10°C/s, in the second cooling, the cold rolled steel sheet is cooled while an average cooling rate $v_2$ in a temperature range T3 of not lower than Ms point and not higher than (Ms point + 100)°C is 0.1 to 5.0°C/s, in the third cooling, the galvanized steel sheet is cooled to a cooling stop temperature T4 of 50°C to 350°C, while bending-and-bending back process is performed at least once in the course of the third cooling, in the re-heat treatment, the galvanized steel sheet is re-heated to a re-heating temperature T5 not higher than 500°C and is re-cooled without being retained at the re-heating temperature T5, and in the fourth cooling, the galvanized steel sheet is retained at a temperature T6 lower than the re-heating temperature T5 for 1 to 200 s.

[4] A member obtained by using the high strength galvanized steel sheet according to [1] or [2].

[5] A method of producing a member, the method comprising subjecting the high strength galvanized steel sheet according to [1] or [2] to at least one of a forming process and a joining process to obtain a member.

## ADVANTAGEOUS EFFECTS OF INVENTION

The present invention can provide a high strength galvanized steel sheet having a yield strength of not less than 1,000 MPa and also having excellent workability, collision proof stress, and crack stopping property.

## BRIEF DESCRIPTION OF DRAWINGS

[FIG. 1] FIG. 1 is a chart diagram showing one example of a heat treatment.
[FIG. 2A] FIG. 2A is a cross-sectional view showing a hat member.
[FIG. 2B] FIG. 2B is a schematic view showing the hat member subjected to a three-point bending test.

## DESCRIPTION OF EMBODIMENTS

[High Strength Galvanized Steel Sheet]

A high strength galvanized steel sheet of the present embodiment (hereinafter also referred to as "present high strength galvanized steel sheet") includes a steel sheet and a galvanizing layer.
The steel sheet included in the present high strength galvanized steel sheet has chemical composition and microstructure which are to be described later, and satisfies the amount of diffusible hydrogen in steel to be described later.

The term "high strength" means having a yield strength (YS) of not less than 1,000 MPa.

The present high strength galvanized steel sheet has a yield strength of not less than 1,000 MPa and also has excellent workability, collision proof stress, and crack stopping property. Therefore, since the strength against a collision is sufficient, the present high strength galvanized steel sheet is preferably used as parts of transportation machines such as automobiles.

As a method of forming the present high strength galvanized steel sheet, a general processing method such as press working can be used without limitation. As a method of welding the present high strength galvanized steel sheet, a general welding method such as spot welding or arc welding can be used without limitation.

<Steel Sheet>

First, the steel sheet (base steel sheet) included in the present high strength galvanized steel sheet is described.

The thickness of the steel sheet is not particularly limited and is, for example, not less than 0.5 mm and not more than 3.0 mm.

<<Chemical Composition>>

Chemical composition of the steel sheet included in the present high strength galvanized steel sheet (hereinafter, conveniently referred to as "present chemical composition") is described.

The percentage "%" used in the present chemical composition means "mass%" unless otherwise noted.

(C: 0.150 to 0.450%)

C generates martensite to raise the strength of the steel sheet. When the amount of C is too small, the total area fraction of tempered martensite and bainite decreases, whereby the collision proof stress and the yield strength deteriorate. Hence, the amount of C is not less than 0.150%, preferably not less than 0.180%, and more preferably not less than 0.200%.

Meanwhile, an excessively large amount of C leads to an increase of a structure X having a nanohardness of 7.0 GPa or more which becomes a starting point of cracking, whereby elongation (El) and the hole expanding ratio ($\lambda$) being indices of workability decrease. Hence, the amount of C is not more than 0.450%, preferably not more than 0.430%, and more preferably not more than 0.400%.

(Si: 0.50 to 3.00%)

Si is an element that suppresses generation of carbides during a heat treatment and that influences hardness of a structure and stability of retained austenite. From the viewpoint of ensuring a structure having suitable nanohardness and ensuring retained austenite in a suitable amount, the amount of Si is not less than 0.50%, preferably not less than 0.70%, and more preferably not less than 0.80%.

Meanwhile, an excessively large amount of Si leads to excessively increased concentration of carbon in retained austenite, resulting in an excessively large area fraction of retained austenite.

Hence, the amount of Si is not more than 3.00%, preferably not more than 2.60%, and more preferably not more than 2.40%.

(Mn: 1.50 to 4.00%)

Mn influences the area fraction of tempered martensite and bainite. From the viewpoint of obtaining a good collision proof stress and a yield strength of not less than 1,000 MPa, the amount of Mn is not less than 1.50%, preferably not less than 1.80%, and more preferably not less than 2.00%.

Meanwhile, an excessively large amount of Mn leads to an increase of a structure X having a nanohardness of 7.0 GPa or more which becomes a starting point of cracking, whereby elongation (El) and the hole expanding ratio ($\lambda$) being indices of workability decrease. Hence, the amount of Mn is not more than 4.00%, preferably not more than 3.80%, and more preferably not more than 3.50%.

(P: Not more than 0.100%)

P is segregated in a prior austenite grain boundary to embrittle the grain boundary and hence reduces the ultimate deformability of the steel sheet, whereby elongation (El) and the hole expanding ratio ($\lambda$) being indices of workability decrease. Accordingly, the amount of P is not more than 0.100%, preferably not more than 0.030%, and more preferably not more than 0.010%.

While the lower limit of the amount of P is not particularly limited, since P is a solid-solution strengthening element and increases the strength of the steel sheet, the amount of P is preferably 0.001%, more preferably 0.002%, and further preferably 0.003%.

(S: Not more than 0.0200%)

S combines with Mn to form coarse MnS which becomes a starting point of cracking, whereby elongation (El) and the hole expanding ratio ($\lambda$) being indices of workability decrease.

Hence, the amount of S is not more than 0.0200%, preferably not more than 0.0100%, and more preferably not more than 0.0020%.

The lower limit of the amount of S is not particularly limited and is preferably 0.0001%, more preferably 0.0002%, and even more preferably 0.0003% due to production engineering restrictions.

(Al: Not more than 0.100%)

Al increases an $A_3$ transformation point. This leads to an increase of ferrite, and thus the total area fraction of tempered martensite and bainite decreases. Hence, the amount of Al is not more than 0.100%, preferably not more than 0.080%, and more preferably not more than 0.060%.

The lower limit of the amount of Al is not particularly limited and is, for example, 0.010% and preferably 0.020% because generation of carbides during a heat treatment is suppressed and generation of retained austenite is promoted.

(O: Not more than 0.0100%)

O forms an oxide which becomes a starting point of cracking, whereby elongation (El) and the hole expanding ratio ($\lambda$) being indices of workability decrease. Hence, the amount of O is not more than 0.0100%, preferably not more than 0.0050%, and more preferably not more than 0.0020%.

(N: Not more than 0.0100%)

N combines with Ti to form TiN which becomes a starting point of cracking, whereby elongation (El) and the hole expanding ratio ($\lambda$) being indices of workability decrease. Hence, the amount of N is not more than 0.0100%, preferably not more than 0.0080%, and more preferably not more than 0.0060%.

The lower limit of the amount of N is not particularly limited and is preferably 0.0001%, more preferably 0.0003%, and even more preferably 0.0005% due to production engineering restrictions.

(Other elements)

The present chemical composition may further include at least one element selected from the group consisting of elements described below, in percentage by mass.

((B: Not more than 0.0100%))

B is preferably added because it is an element capable of improving the hardenability of the steel sheet by being segregated in an austenite grain boundary and increases the yield strength of the steel sheet.

Meanwhile, when the amount of B is too large, $Fe_{23}(CB)_6$ is formed and becomes a starting point of cracking, whereby elongation (El) and the hole expanding ratio ($\lambda$) being indices of workability decrease. Hence, the amount of B is preferably not more than 0.0100%, more preferably not more than 0.0050%, even more preferably not more than 0.0040%, and particularly preferably not more than 0.0030%.

The lower limit of the amount of B is not particularly limited and is, for example, 0.0005% and preferably 0.0010% from the viewpoint of obtaining the effect of addition of B.

((Ti: Not more than 0.200%))

Ti is preferably added because it forms a fine carbide, nitride, or carbonitride during hot rolling or a heat treatment to thereby increase the yield strength of the steel sheet.

However, when the amount of Ti is too large, an amount of coarse nitride which is formed by combination of Ti and N and which becomes a starting point of cracking increases, whereby elongation (El) and the hole expanding ratio ($\lambda$) being indices of workability decrease. Hence, the amount of Ti is preferably not more than 0.200%, more preferably not more than 0.100%, and even more preferably not more than 0.050%.

The lower limit of the amount of Ti is not particularly limited and is, for example, 0.005%, and preferably 0.010% from the viewpoint of obtaining the effect of addition of Ti.

((Nb: Not more than 0.200%, V: Not more than 0.200%, W: Not more than 0.100%))

Nb, V, and W are preferably added because they form fine carbides, nitrides, or carbonitrides during hot rolling or a heat treatment to thereby increase the yield strength of the steel sheet.

However, when the amounts to add are excessively large, these elements do not dissolve during steel slab heating and remain as coarse carbides. Coarse carbide becomes a starting point of cracking, whereby elongation (El) and the hole expanding ratio ($\lambda$) being indices of workability decrease.

Hence, the amount of Nb is preferably not more than 0.200%, more preferably not more than 0.100%, and even more preferably not more than 0.050%. The lower limit thereof is not particularly limited and is, for example, 0.005% and is preferably 0.010% from the viewpoint of obtaining the effect of addition of Nb.

The amount of V is preferably not more than 0.200%, more preferably not more than 0.100%, and even more preferably not more than 0.050%. The lower limit thereof is not particularly limited and is, for example, 0.005% and preferably 0.010% from the viewpoint of obtaining the effect of addition of V.

The amount of W is preferably not more than 0.100%, more preferably not more than 0.080%, and even more preferably not more than 0.050%. The lower limit thereof is not particularly limited and is, for example, 0.010% and preferably 0.020% from the viewpoint of obtaining the effect of addition of W.

((Mo: Not more than 1.000%, Cr: Not more than 1.000%))

Mo and Cr are preferably added because they increase the hardenability of the steel sheet to thereby increase the yield strength of the steel sheet. However, when the amounts of these elements are excessively large, hard martensite is excessively generated so that starting points of cracking increase, whereby elongation (EI) and the hole expanding ratio ($\lambda$) being indices of workability decrease.

Hence, the amount of Mo is preferably not more than 1.000%, more preferably not more than 0.800%, and even more preferably not more than 0.500%. The lower limit thereof is not particularly limited and is, for example, 0.010% and preferably 0.020% from the viewpoint of obtaining the effect of addition of Mo.

The amount of Cr is preferably not more than 1.000%, more preferably not more than 0.800%, and even more preferably not more than 0.500%. The lower limit thereof is not particularly limited and is, for example, 0.010% and preferably 0.020% from the viewpoint of obtaining the effect of addition of Cr.

((Sb: Not more than 0.200%, Sn: Not more than 0.200%))

Sb and Sn are preferably added because they suppress decarburization of the surfaces of the steel sheet to thereby increase the yield strength of the steel sheet. However, when the amounts of these elements are excessively large, the steel is embrittled, whereby elongation (EI) and the hole expanding ratio ($\lambda$) being indices of workability decrease.

Hence, the amount of Sb is preferably not more than 0.200%, more preferably not more than 0.080%, and even more preferably not more than 0.040%. The lower limit thereof is not particularly limited and is, for example, 0.001% and preferably 0.002% from the viewpoint of obtaining the effect of addition of Sb.

The amount of Sn is preferably not more than 0.200%, more preferably not more than 0.080%, and even more preferably not more than 0.040%. The lower limit thereof is not particularly limited and is, for example, 0.001% and preferably 0.002% from the viewpoint of obtaining the effect of addition of Sn.

((Zr: Not more than 0.1000%, Te: Not more than 0.100%))

Zr and Te are preferably added because they spheroidize the shapes of nitrides and sulfides to thereby improve elongation (EI) and the hole expanding ratio ($\lambda$) being indices of workability. However, when the amounts of these elements are excessively large, coarse precipitates remaining in an undissolved state increase during steel slab heating in hot rolling, thus degrading elongation (EI) and the hole expanding ratio ($\lambda$) being indices of workability.

Hence, the amount of Zr is preferably not more than 0.1000%, more preferably not more than 0.0800%, and even more preferably not more than 0.0500%. The lower limit thereof is not particularly limited and is, for example, 0.0050% and preferably 0.0100% from the viewpoint of obtaining the effect of addition of Zr.

The amount of Te is preferably not more than 0.100%, more preferably not more than 0.080%, and even more preferably not more than 0.050%. The lower limit thereof is not particularly limited and is, for example, 0.005% and preferably 0.010% from the viewpoint of obtaining the effect of addition of Te.

((Cu: Not more than 1.000%))

Cu is preferably added because it increases the hardenability of the steel sheet to thereby increase the yield strength of the steel sheet. However, when the amount of Cu is excessively large, inclusions of Cu increase, thus degrading elongation (EI) and the hole expanding ratio ($\lambda$) being indices of workability.

Hence, the amount of Cu is preferably not more than 1.000%, more preferably not more than 0.800%, and even more preferably not more than 0.500%. The lower limit thereof is not particularly limited and is, for example, 0.010% and preferably 0.020% from the viewpoint of obtaining the effect of addition of Cu.

((Ni: Not more than 1.000%))

Ni is preferably added because it increases the hardenability of the steel sheet to thereby increase the yield strength of the steel sheet. However, when the amount of Ni is excessively large, hard martensite increases, thus degrading elongation (El) and the hole expanding ratio ($\lambda$) being indices of workability.

Hence, the amount of Ni is preferably not more than 1.000%, more preferably not more than 0.800%, and even more preferably not more than 0.500%. The lower limit thereof is not particularly limited and is, for example, 0.010% and preferably 0.020% from the viewpoint of obtaining the effect of addition of Ni.

((Ca: Not more than 0.0100%, Mg: Not more than 0.0100%, REM: Not more than 0.0100%))

Ca, Mg, and REM (Rare Earth Metal) are preferably added because they spheroidize the shapes of precipitates such as sulfides and oxides to thereby improve elongation (El) and the hole expanding ratio ($\lambda$) being indices of workability. However, when the amounts of these elements are excessively large, coarse sulfides become starting points of cracking, thus degrading elongation (El) and the hole expanding ratio ($\lambda$) being indices of workability.

Hence, the amount of Ca is preferably not more than 0.0100%, more preferably not more than 0.0050%, and even more preferably not more than 0.0040%. The lower limit thereof is not particularly limited and is, for example, 0.0005% and preferably 0.0010% from the viewpoint of obtaining the effect of addition of Ca.

The amount of Mg is preferably not more than 0.0100%, more preferably not more than 0.0050%, and even more preferably not more than 0.0040%. The lower limit thereof is not particularly limited and is, for example, 0.0005% and preferably 0.0010% from the viewpoint of obtaining the effect of addition of Mg.

The amount of REM is preferably not more than 0.0100%, more preferably not more than 0.0040%, and even more preferably not more than 0.0030%. The lower limit thereof is not particularly limited and is, for example, 0.0005% and preferably 0.0010% from the viewpoint of obtaining the effect of addition of REM.

((Co: Not more than 0.010%, Ta: Not more than 0.10%, Hf: Not more than 0.10%, Bi: Not more than 0.200%))

Co, Ta, Hf, and Bi are preferably added because they spheroidize the shapes of precipitates to thereby improve elongation (El) and the hole expanding ratio ($\lambda$) being indices of workability. However, when the amount of these elements are excessively large, coarse precipitates become starting points of cracking, thus degrading elongation (El) and the hole expanding ratio ($\lambda$) being indices of workability.

Hence, the amount of Co is preferably not more than 0.010%, more preferably not more than 0.008%, and even more preferably not more than 0.007%. The lower limit thereof is not particularly limited and is, for example, 0.001% and preferably 0.002% from the viewpoint of obtaining the effect of addition of Co.

The amount of Ta is preferably not more than 0.10%, more preferably not more than 0.08%, and even more preferably not more than 0.07%. The lower limit thereof is not particularly limited and is, for example, 0.01% and preferably 0.02% from the viewpoint of obtaining the effect of addition of Ta.

The amount of Hf is preferably not more than 0.10%, more preferably not more than 0.08%, and even more preferably not more than 0.07%. The lower limit thereof is not particularly limited and is, for example, 0.01% and preferably 0.02% from the viewpoint of obtaining the effect of addition of Hf.

The amount of Bi is preferably not more than 0.200%, more preferably not more than 0.100%, and even more preferably not more than 0.080%. The lower limit thereof is not particularly limited and is, for example, 0.001% and preferably 0.005% from the viewpoint of obtaining the effect of addition of REM.

(Balance)

The balance in the present chemical composition consists of Fe and inevitable impurities.

<<Microstructure>>

Next, the microstructure of the steel sheet included in the present high strength galvanized steel sheet (hereinafter, conveniently referred to as "present microstructure") is described.

In order to obtain the effect of the present invention, it is not enough to satisfy the foregoing present chemical composition alone, and it is necessary to satisfy the present microstructure described below.

Hereinbelow, the area fraction is an area fraction with respect to the entire microstructure. The area fraction of each structure is determined by a method described in Examples below.

(Total area fraction of tempered martensite and bainite: 55% to 95%)

From the viewpoint of stably securing good collision proof stress and yield strength, the total area fraction of tempered martensite and bainite is not less than 55%, preferably not less than 58%, and more preferably not less than 60%.

Meanwhile, when the total area fraction of tempered martensite and bainite is too large, the structure X having a nanohardness of 7.0 GPa or more increases, and a presence ratio (X/Y) is excessively high.

Accordingly, this total area fraction is not more than 95%, preferably not more than 92%, and more preferably not more than 88%.

<<Area fraction of retained austenite: 5 to 30%>>

Retained austenite improves ductility of the steel sheet. Hence, the area fraction of retained austenite is not less than 5%, preferably not less than 6%, and more preferably not less than 8%.

Meanwhile, when the area fraction of retained austenite is too large and when a stress is repeatedly applied, retained austenite that is transformed to martensite increases, whereby starting points of cracking increase, thus degrading elongation (El) and the hole expanding ratio ($\lambda$) being indices of workability.

Accordingly, the area fraction of retained austenite is not more than 30%, preferably not more than 25%, and more preferably not more than 20%.

(Presence ratio X/Y: 0.5 to 2.5)

The structure X having a nanohardness of 7.0 GPa or more is fine and hard, and hence stops the growth of a crack generated due to an external force at a collision, thus improving a crack stopping property.

The structure Y having a nanohardness of 6.5 GPa or less, on the other hand, has high toughness and thus improves elongation (El) and the hole expanding ratio ($\lambda$) being indices of workability.

When the presence ratio of the structure X to the structure Y (X/Y) is appropriately controlled, workability and the crack stopping property can be both good.

The presence ratio (X/Y) is not less than 0.5, preferably not less than 0.8, and more preferably not less than 1.0 for the reason of excellent crack stopping property.

Meanwhile, when the presence ratio of the structure X to the structure Y (X/Y) is too high, the structure X having a nanohardness of 7.0 GPa or more becomes a starting point of cracking, thus degrading elongation (El) and the hole expanding ratio ($\lambda$) being indices of workability. Hence, the presence ratio (X/Y) is not more than 2.5, preferably not more than 2.3, and more preferably not more than 2.0.

The nanohardness is hardness measured using the nanoindentation method and is specifically determined by the method described in Examples to be described later.

The plastic deformation resistance in a local region of a structure at a submicron level cannot be evaluated by use of other hardnesses (such as Vickers hardness) than the nanohardness.

(Remaining structure)

The present microstructure may include, as a structure (remaining structure) other than tempered martensite, bainite and retained austenite, known structures such as fresh martensite; pearlite; ferrite; iron-based carbonitride; alloyed carbonitride; and inclusions such as MnS and $Al_2O_3$.

The area fraction of the remaining structure is preferably not more than 10%, more preferably not more than 8%, and even more preferably not more than 5%. When the area fraction of the remaining structure falls within this range, the effect of the present invention would not be impaired.

<<Amount of diffusible hydrogen in steel: Not more than 0.60 mass ppm>>

When the amount of diffusible hydrogen in steel is too large, delayed fracture occurs, and elongation (El) and the hole expanding ratio ($\lambda$) being indices of workability degrade, whereby collision proof stress deteriorates. Hence, the amount of diffusible hydrogen in steel is not more than 0.60 mass ppm, preferably not more than 0.50 mass ppm, and more preferably not more than 0.40 mass ppm.

The amount of diffusible hydrogen in steel is determined by a method described in Examples below.

<Galvanizing Layer>

The present high strength galvanized steel sheet further includes a galvanizing layer on at least one surface of the steel sheet from the viewpoint of improving corrosion resistance and other properties.

The galvanizing layer may be a galvannealing layer.

The galvanizing layer is formed by a galvanizing treatment.

[Method of Producing High Strength Galvanized Steel Sheet]

Next, a method of producing a high strength galvanized steel sheet of the present embodiment (hereinafter also referred to as "present production method") is described. The present production method is a method of producing the present high strength galvanized steel sheet described above.

A temperature at which the steel slab, the steel sheet or the like is heated or cooled, which is described below, means a surface temperature of the steel slab, the steel sheet or the like, unless otherwise specified.

A method of producing molten steel which becomes a steel slab (steel material) is not particularly limited, and known methods using a converter, an electric furnace or the like are applicable. It is preferable to obtain a steel slab from molten steel by a continuous casting method. Another method such as an ingot casting blooming method or thin slab continuous casting may be adopted to obtain a steel slab.

<Hot Rolling>

In the present production method, first, a steel slab having the present chemical composition described above is hot-rolled. Thus, a hot rolled steel sheet is obtained.

When the hot rolling is performed, the steel slab may be re-heated in a heating furnace and then rolled. When the steel slab maintains a temperature equal to or higher than a predetermined temperature, the steel slab may be directly rolled without being heated.

In the hot rolling, a steel slab is subjected to rough rolling and finish rolling.

Preferably, the steel slab is heated to dissolve carbides in the steel slab prior to rough rolling.

From the viewpoint of dissolving the carbides or preventing an increase in the rolling load, the temperature at the time of heating the steel slab (steel slab heating temperature) is preferably not lower than 1100°C and more preferably not lower than 1150°C.

On the other hand, from the viewpoint of preventing an increase in scale loss, the steel slab heating temperature is preferably not higher than 1300°C and more preferably not higher than 1280°C.

As described above, when the steel slab before the rough rolling maintains a temperature equal to or higher than a predetermined temperature and when the carbides in the steel slab are dissolved, heating of the steel slab before the rough rolling can be omitted.

The conditions of the rough rolling and the finish rolling are not particularly limited, but for example, a finish rolling end temperature is preferably 700°C to 1100°C, and more preferably 800°C to 1000°C.

<Cold Rolling>

Next, the hot rolled steel sheet is subjected to cold rolling, whereby a cold rolled steel sheet is obtained.

A rolling rate of the cold rolling is preferably not less than 30% and more preferably not less than 35%. The upper limit thereof is not particularly limited and is, for example, not more than 70% and preferably not more than 65%.

<Heat Treatment (including Galvanizing Treatment)>

Next, the cold rolled steel sheet obtained by the cold rolling is subjected to a heat treatment.

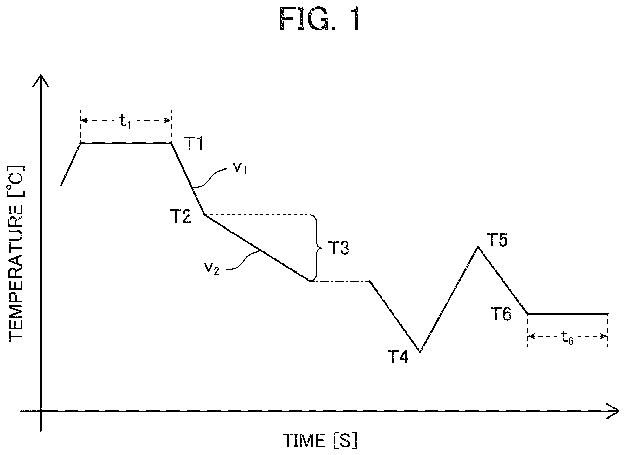

FIG. 1 is a flowchart diagram showing an example of the heat treatment.

In the heat treatment, in short, the cold rolled steel sheet is subjected to a heat treatment, first cooling, second cooling, and a galvanizing treatment in this order, whereby a galvanized steel sheet is obtained. The galvanized steel sheet is then subjected to third cooling, a re-heat treatment, and fourth cooling in this order.

FIG. 1 is an example where temperature T2 is (Ms point + 100) °C.

The galvanized steel sheet having undergone the fourth cooling corresponds to the present high strength galvanized steel sheet described above.

<<Heat Treatment>>

First, the cold rolled steel sheet is heated at heating temperature T1.

(Heating temperature T1: 800°C to 950°C)

When the heating temperature T1 is too low, the steel sheet is heated in a dual phase of ferrite and austenite; as a result, the final microstructure contains ferrite, so that the total area fraction of tempered martensite and bainite decreases.

Hence, the heating temperature T1 is not lower than 800°C, preferably not lower than 820°C, and more preferably not lower than 850°C.

Meanwhile, when the heating temperature T1 is too high, the amount of hydrogen entering steel increases due to an increase in hydrogen partial pressure, whereby the amount of diffusible hydrogen in steel increases.

In addition, the total area fraction of tempered martensite and bainite increases, and this leads to an excessively high presence ratio of the structure X to the structure Y (X/Y).

Hence, the heating temperature T1 is not higher than 950°C, preferably not higher than 930°C, and more preferably not higher than 900°C.

The time for retaining the cold rolled steel sheet at the heating temperature T1 (heating time $t_1$) is not particularly limited and is, for example, not less than 10 s, preferably not less than 50 s, and more preferably not less than 80 s.

Meanwhile, the heating time $t_1$ is, for example, not more than 500 s, preferably not more than 300 s, and more preferably not more than 200 s.

<<First Cooling>>

Next, the first cooling is performed.

Specifically, the cold rolled steel sheet having been heated at the heating temperature T1 is cooled to the temperature T2 not lower than (Ms point + 100) °C and not higher than (Ms point + 600) °C.

The Ms point (unit: °C) is determined by the following equation (1).

$$Ms = 550 - 350 \times [C] - 40 \times [Mn] - 35 \times [V] - 20 \times [Cr] - 17 \times [Ni] - 10 \times [Cu] - 10 \times [Mo] - 5 \times [W] + 15 \times [Co] + 30 \times [Al] \tag{1}$$

In the above equation (1), [M] is a content (unit: mass %) of the element M in the above-described chemical composition (present chemical composition).

(Average cooling rate $v_1$: Not lower than 10°C/s)

Meanwhile, when the average cooling rate $v_1$ from the heating temperature T1 to the temperature T2 is too low in the first cooling, ferrite transformation occurs during the cooling, whereby the total area fraction of tempered martensite and bainite decreases.

Hence, the average cooling rate $v_1$ is not lower than 10°C/s, preferably not lower than 11°C/s, and more preferably not lower than 13°C/s.

The upper limit of the average cooling rate $v_1$ is not particularly limited and is, for example, 40°C/s, preferably 35°C/s, and more preferably 30°C/s.

<<Second Cooling>>

The second cooling is next performed.

Specifically, the cold rolled steel sheet cooled to the temperature T2 is cooled to at least the Ms point before the galvanizing treatment to be described later is performed.

(Average cooling rate $v_2$: 0.1 to 5.0°C/s)

In the second cooling, hydrogen that was introduced into the cold rolled steel sheet through the above-described heat treatment escapes.

At this time, if the cold rolled steel sheet is slowly cooled in a temperature range T3 of not lower than the Ms point and not higher than (Ms point + 100) °C, bainite transformation occurs, and austenite with high hydrogen solubility decreases, whereby the amount of diffusible hydrogen in steel decreases.

Hence, the average cooling rate $v_2$ in the temperature range T3 is not lower than 0.1°C/s, preferably not lower than 0.2°C/s, and more preferably not lower than 0.3°C/s.

Meanwhile, when the average cooling rate $v_2$ in the temperature range T3 is too high, the total area fraction of tempered martensite and bainite decreases.

Hence, the average cooling rate $v_2$ is not higher than 5.0°C/s, preferably not higher than 4.5°C/s, and more preferably not higher than 4.0°C/s.

<<Galvanizing Treatment>>

Subsequently, the cold rolled steel sheet cooled to at least the Ms point is subjected to the galvanizing treatment. Thus, a galvanized steel sheet is obtained.

A preferred galvanizing treatment is hot-dip galvanizing treatment or hot-dip galvannealing treatment.

The hot-dip galvanizing treatment is performed to thereby form a galvanizing layer.

When the hot-dip galvanizing treatment is performed, for example, the steel sheet is immersed in a zinc bath having a bath temperature of 440°C to 500°C to be galvanized. Thereafter, it is preferable to adjust a coating weight of the plating layer by gas wiping or other methods.

As the zinc bath, a zinc bath having a chemical composition including the Al content of 0.10 to 0.23 mass% with the balance being Zn and inevitable impurities is preferred.

The hot-dip galvannealing treatment is performed to thereby form a galvannealing layer.

When the hot-dip galvannealing treatment is performed, an excessively low alloying temperature causes an excessively low Zn-Fe alloying rate, and this may make alloying extremely difficult. On the other hand, when the alloying temperature is too high, untransformed austenite may be transformed into pearlite. Hence, the alloying temperature is preferably 450°C to 600°C, more preferably 470°C to 550°C, and further preferably 470°C to 530°C.

The coating weight of the galvanizing layer of the galvanized steel sheet (GI) and the galvannealed steel sheet (GA) is preferably 20 to 80 g/m$^2$ per one side (double-sided plating).

<<Third Cooling>>

The third cooling is next performed.

Specifically, the galvanized steel sheet is cooled to cooling stop temperature T4, and bending-and-bending back process is performed at least once in the course of the cooling.

(Cooling stop temperature T4: 50°C to 350°C)

When the cooling stop temperature T4 is too low, the total area fraction of tempered martensite and bainite increases, and this leads to an excessively high presence ratio of the structure X to the structure Y (X/Y).

Hence, the cooling stop temperature T4 is not lower than 50°C, preferably not lower than 100°C, and more preferably not lower than 150°C.

Meanwhile, when the cooling stop temperature T4 is too high, the total area fraction of tempered martensite and bainite decreases. In addition, the structure Y having a nanohardness of 6.5 GPa or less increases, and this leads to an excessively low presence ratio of the structure X to the structure Y (X/Y).

Hence, the cooling stop temperature T4 is not higher than 350°C, preferably not higher than 320°C, and more preferably not higher than 300°C.

(Number of times of bending-and-bending back process: At least once)

In the course of cooling the galvanized steel sheet to the cooling stop temperature T4, the bending-and-bending back process is performed, whereby dislocations are introduced in the cold rolled steel sheet constituting the galvanized steel sheet. The introduced dislocations turn to trapping sites of diffusible hydrogen in steel and thus can decrease the amount of diffusible hydrogen in steel.

Thus, the number of times of bending-and-bending back process is at least once, preferably twice or more, and more preferably three times or more.

Meanwhile, the upper limit of the number of times of bending-and-bending back process is not particularly limited and is, for example, 10 times, preferably 8 times, and more preferably 6 times.

<<Re-heat Treatment>>

Subsequently, a re-heat treatment is performed.

Specifically, the galvanized steel sheet having undergone the bending-and-bending back process at least once is re-heated to re-heating temperature T5 and is re-cooled without being retained at the re-heating temperature T5.

<<Re-heating Temperature T5>>

The re-heating temperature T5 is not higher than 500°C, preferably not higher than 450°C, and more preferably not higher than 400°C.

At this temperature, bainite transformation proceeds, and retained austenite easily remains in the cold rolled steel sheet constituting the galvanized steel sheet.

<<Fourth Cooling>>

Fourth cooling is then performed.
Specifically, the galvanized steel sheet that has been re-cooled without being retained at the re-heating temperature T5 is retained at temperature T6.

<<Temperature T6: Lower than re-heating temperature T5>>

The galvanized steel sheet is retained at the temperature T6 that is lower than the re-heating temperature T5, whereby the cold rolled steel sheet constituting the galvanized steel sheet is not excessively tempered, and the distribution of the structure X and the structure Y can be well controlled.
When the temperature T6 is not lower than the re-heating temperature T5, the structure Y having a nanohardness of 6.5 GPa or less increases, and this leads to an excessively low presence ratio of the structure X to the structure Y (X/Y).

(Retaining time $t_6$ at Temperature T6: 1 to 200 s)

When time (retaining time $t_6$) for retaining the galvanized steel sheet at the temperature T6 is too short, in the microstructure of the cold rolled steel sheet constituting the galvanized steel sheet, carbon in each structure is present in a solid solution state. Consequently, the structure X having a nanohardness of 7.0 GPa or more increases, and this leads to an excessively high presence ratio of the structure X to the structure Y (X/Y).
Hence, the retaining time $t_6$ is not less than 1 s, preferably not less than 10 s, and more preferably not less than 20 s.
Meanwhile, when the retaining time $t_6$ is too long, in the microstructure of the cold rolled steel sheet constituting the galvanized steel sheet, carbon in each structure is present as a carbide. Consequently, the structure Y having a nanohardness of 6.5 GPa or less increases, and this leads to an excessively low presence ratio of the structure X to the structure Y (X/Y).
Hence, the retaining time $t_6$ is not more than 200 s, preferably not more than 180 s, and more preferably not more than 150 s.
In the present production method, for example, the retaining temperature such as the heating temperature or the re-heating temperature need not be constant as long as it is within the above-described temperature range. A cooling rate may vary during cooling as long as it is within the above-described rate range. The heat treatment may be performed in any equipment as long as the conditions such as the above-described temperature range are satisfied.

[Member]

Next, a member of the present embodiment (hereinafter also referred to as "present member") is described.
The present member is a member formed by using the present high strength galvanized steel sheet described above as at least part of the member, and is, for example, a member formed into a target shape by processing (e.g., pressing) the present high strength galvanized steel sheet.
The present member is preferably a member for automotive parts. Note that the member for automotive parts may include a steel sheet other than the present high strength galvanized steel sheet as a material.
As described above, the present high strength galvanized steel sheet has a yield strength of not less than 1,000 MPa and also has excellent workability, collision proof stress, and crack stopping property. Therefore, the present member is excellent in workability, collision proof stress, and crack stopping property and also can contribute to reduction of the vehicle body weight, and thus is suitable for all members used in, among automotive parts, particularly skeletal structure parts or reinforcing parts of automobiles.

[Method of Producing Member]

Next described is a method of producing the present member.
The present member is obtained by, for example, subjecting the present high strength galvanized steel sheet to at least one of a forming process and a joining process.
The forming process is not particularly limited, and examples thereof include press working.
The joining process is not particularly limited, and examples thereof include: general welding such as spot welding and arc welding; and crimping using rivets; and the like.

[EXAMPLES]

The invention is specifically described below by way of Examples. However, the invention is not limited to the examples described below.

<Production of Steel Sheet>

Molten steel having the chemical composition as shown in Table 1 below with the balance being Fe and inevitable impurities was made in a converter, and a steel slab was obtained by a continuous casting method. In Table 1 below, the underlined figures mean those out of the ranges of the invention (the same applies to Tables 2 to 3 to be described later).

The steel slabs thus obtained were subjected to hot rolling under the conditions described in Table 2 below, and thus hot rolled steel sheets were obtained. Specifically, each steel slab was heated to 1250°C and rough rolled, followed by finish rolling at a finish rolling end temperature of 900°C.

The hot rolled steel sheet obtained was subjected to cold rolling at a rolling rate shown in Table 2 below, thereby obtaining a cold rolled steel sheet (thickness: 1.2 mm) .

The cold rolled steel sheet obtained was subjected to a heat treatment, first cooling, second cooling, and a galvanizing treatment under the conditions shown in Table 2 below, whereby a galvanized steel sheet was obtained.

In the heat treatment, a retaining time (heating time $t_1$) at the heating temperature T1 was 120 s.

In the galvanizing treatment, both surfaces of the cold rolled steel sheet were subjected to a hot-dip galvanizing treatment or a hot-dip galvannealing treatment to obtain a galvanized steel sheet (GI) or a galvannealed steel sheet (GI).

As a galvanizing bath, when GI was produced, a zinc bath containing Al: 0.20 mass% with the balance being Zn and inevitable impurities was used, and when GA was produced, a zinc bath containing Al: 0.14 mass% with the balance being Zn and inevitable impurities was used.

The bath temperature was 470°C for both GI and GA production.

The coating weight of the plating layer was 45 to 72 g/m$^2$ per one side when GI was produced and 45 g/m$^2$ per one side when GA was produced.

When GA was produced, the alloying temperature was 530°C.

The composition of the plating layer of GI was the composition including Fe: 0.1 to 1.0 mass% and Al: 0.2 to 1.0 mass% with the balance being Fe and inevitable impurities. The composition of the plating layer of GA was the composition including Fe: 7 to 15 mass% and Al: 0.1 to 1.0 mass% with the balance being Fe and inevitable impurities.

The galvanized steel sheet (GI or GA) obtained was subsequently subjected to third cooling, a re-heat treatment, and fourth cooling under the conditions shown in Table 2 below.

The galvanized steel sheet (GI or GA) having undergone such heat treatment (in particular, having undergone fourth cooling) is hereinafter also simply referred to as "steel sheet".

<Observation of Microstructure>

For each of the steel sheets thus obtained, the microstructure was observed as described below. The results are shown in Table 3 below. In Table 3 below, martensite is denoted as "M," bainite is denoted as "B," and austenite is denoted as "$\gamma$."

<<Total area fraction of tempered martensite and bainite>>

The obtained steel sheet was polished such that a cross section (L cross section) at a position of 1/4 of the sheet thickness and parallel to the rolling direction became an observation surface. The observation surface was etched using 1 vol% Nital, and then enlarged and observed with a scanning electron microscope (SEM) at a magnification of 3000X.

The observation surface was observed in 10 fields, and SEM images were obtained. The obtained SEM images were analyzed to determine the total area fraction (unit: %) of tempered martensite and bainite.

More specifically, dark gray parts in each obtained SEM image were determined to be tempered martensite and bainite, and the area fraction (average area fraction of the 10 fields) was determined. For the SEM image analysis, Image-Pro available from Media Cybernetics Inc. was used as analysis software.

<<Area fraction of retained austenite>>

In the observation surface (L cross section at a position of 1/4 of the sheet thickness) of the steel sheet obtained, diffraction intensities of crystal planes described below were determined using an X-ray diffraction (XRD) instrument with CoK$\alpha$ as an X-ray source.

Specifically, ratios of diffraction intensities of respective planes (200), (220), and (311) of fcc iron (austenite) to diffraction intensities of respective planes (200), (211), and (220) of bcc iron were determined. The determined nine ratios were averaged to obtain a value, which was regarded as the volume fraction of retained austenite.

The obtained volume fraction was treated as the area fraction (unit: %) of retained austenite.

<<Measurement of nanohardness>>

The obtained steel sheet was polished such that a cross section (L cross section) at a position of 1/4 of the sheet thickness and parallel to the rolling direction became an observation surface. The observation surface was mirror polished with diamond paste, followed by finishing polishing with colloidal silica.

The nanohardness of the observation surface was measured at 225 points by use of a nanoindentation device having a Berkovich indenter.

The measurement conditions are set as: a loading rate and an unloading rate of 50 $\mu$N/s; a maximum load of 500 $\mu$N; a data collecting pitch of 5 ms; and a distance between dents of 2 $\mu$m or more.

Of the 225 measurement points, measurement points having a nanohardness of 7.0 GPa or more were specified as the structure X, while measurement points having a nanohardness of 6.5 GPa or less were specified as the structure Y, and the ratio between the numbers of the measurement points was determined as the presence ratio (X/Y) of the structure X to the structure Y.

<Measurement of amount of diffusible hydrogen in steel>

From the obtained steel sheet, a galvanizing layer was removed using a router (precision grinder), and, thereafter, a specimen having a length of 30 mm and a width of 5 mm was sampled. For the sampled specimen, the amount of diffusible hydrogen in steel was measured by a thermal desorption analysis method. The heating rate was set to 200°C/hr. The cumulative value of the amount of hydrogen detected in the temperature range from room temperature (25°C) to a temperature lower than 210°C was defined as the amount of diffusible hydrogen in steel (unit: mass ppm).

The result is shown in Table 3 below. The amount of diffusible hydrogen in steel is preferably not more than 0.60 mass ppm.

<Evaluation>

The obtained steel sheets were evaluated by the following methods. The results are shown in Table 3 below.

<<Tensile test>>

From each of the obtained steel sheets, No. 5 specimen described in JIS Z 2241 with its longitudinal direction (tensile direction) being a direction of 90° to the rolling direction was sampled. Using the specimen thus sampled, a tensile test according to JIS Z 2241 was performed five times, and the yield strength (YS) and the elongation (El) were determined from the average value of the five times.

When the YS was not less than 1,000 MPa, the strength can be rated as high.

When the El was not less than 9.0%, the ductility can be rated as good, and the workability can be rated as excellent.

<<Hole expanding test>>

The obtained steel sheet was subjected to the hole expanding test according to JIS Z 2256.

Specifically, the obtained steel sheet was first sheared to sample a specimen having a size of 100 mm x 100 mm. In the sampled specimen, a hole with a diameter of 10 mm was punched with a clearance of 12.5%. Then, using a die with an internal diameter of 75 mm, a 60-degree cone punch was pressed into the hole with the specimen being held with a blank holding force of 9 ton (88.26 kN), and the hole diameter $D_f$ (unit: mm) at the crack initiation limit was measured. The hole expansion ratio $\lambda$ (unit: %) was obtained by the following equation, with the initial hole diameter being $D_0$ (unit: mm).

When $\lambda$ was not less than 20%, the workability can be rated as excellent.

$$\lambda = \{(D_f - D_0)/D_0\} \times 100$$

<<Collision proof stress evaluation test>>

Using each of the obtained steel sheets, a member (hat member) having a hat-shaped cross section was produced, and a three-point bending test was performed to determine the maximum load (unit: kN).

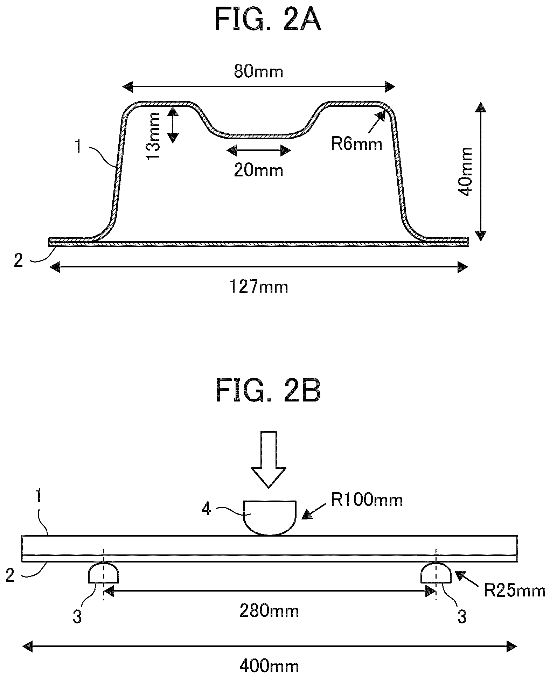

First, a hat member 1 is described with reference to FIG. 2A.

FIG. 2A is a cross-sectional view showing the hat member 1. In FIG. 2A, the dimensions of the hat member 1 are shown. The hat member 1 is joined to a flat plate 2 by spot welding (nugget diameter: $4.5\sqrt{t}$, spot-to-spot pitch: 35 mm). The flat plate 2 is a cold-rolled steel sheet having no plating layer, and has a tensile strength (TS) of 590 MPa and a thickness t that is the same (1.2 mm) as that of the hat member 1.

Next, the three-point bending test is described with reference to FIG. 2B.

FIG. 2B is a schematic view showing the hat member 1 subjected to the three-point bending test. Various dimensions are shown also in FIG. 2B. The flat plate 2 joined to the hat member 1 is supported by a support member 3 which is a rigid body. In this state, an impactor 4, which is a rigid body, is moved from above toward the hat member 1 at a velocity of 1 m/s. In this way, the three-point bending test is performed.

For each steel sheet, the three-point bending test was performed three times, and the average value of the maximum loads obtained in those times was defined as the maximum load of the steel sheet.

When the maximum load was not less than 40 kN, "A" was given, when the maximum load was not less than 30 kN and less than 40 kN, "B" was given, and when the maximum load was less than 30 kN, "C" was given in Table 3 below.

When the result is A or B, the collision proof stress can be rated as excellent.

<<Crack stopping property evaluation test>>

Each of the obtained steel sheets was bent using a 90 degree V-block under the test conditions below to obtain a specimen. A ridge portion at the apex of the bend in the obtained specimen was observed with a digital microscope (RH-2000, manufactured by HIROX Co., Ltd.) at a magnification of 40X to measure the length of a crack. When plural cracks are present, the sum of the lengths of the cracks was obtained.

When the sum of the lengths of cracks was not more than 6000 $\mu$m, "A" was given, when the sum of the lengths of cracks was more than 6000 $\mu$m and less than 12000 $\mu$m, "B" was given, and when the sum of the lengths of cracks was not less than 12000 $\mu$m, "C" was given in Table 3 below.

When the result is A or B, the crack stopping property can be rated as excellent.

(Test conditions)

    Test method: roll supporting, punch pressing
    Roll diameter: $\varphi$ 30 mm
    Punch tip R: 0.4 mm
    Distance between rolls: (thickness x 2) + 0.5 mm
    Stroke rate: 20 mm/min
    Specimen size: 60 mm x 60 mm
    Bending direction: Direction perpendicular to rolling direction

[Table 1]

| Table 1 (1/2) | | | | | | | | | | | | | | | |
|---|---|---|---|---|---|---|---|---|---|---|---|---|---|---|---|
| Steel ID | Chemical composition [mass%] | | | | | | | | | | | | | | |
| | C | Si | Mn | P | S | Al | N | O | B | Ti | Nb | V | W | Mo | Cr |
| A | 0.230 | 1.21 | 2.95 | 0.006 | 0.0005 | 0.035 | 0.0040 | 0.0006 | 0.0019 | 0.021 | 0.020 | - | - | - | - |
| B | 0.221 | 1.30 | 3.10 | 0.004 | 0.0008 | 0.030 | 0.0048 | 0.0007 | - | - | 0.019 | - | - | - | - |
| C | 0.251 | 1.25 | 2.80 | 0.005 | 0.0010 | 0.040 | 0.0039 | 0.0006 | - | - | - | 0.085 | - | - | - |
| D | 0.153 | 1.50 | 3.62 | 0.010 | 0.0010 | 0.041 | 0.0042 | 0.0008 | - | - | - | - | 0.025 | - | - |
| E | 0.245 | 2.96 | 1.52 | 0.009 | 0.0015 | 0.045 | 0.0048 | 0.0012 | - | - | 0.045 | - | - | 0.191 | - |
| F | 0.260 | 1.51 | 2.76 | 0.011 | 0.0011 | 0.042 | 0.0051 | 0.0004 | 0.0038 | 0.021 | - | - | - | - | - |
| G | 0.240 | 1.42 | 2.35 | 0.004 | 0.0007 | 0.031 | 0.0061 | 0.0006 | - | - | - | - | - | - | - |
| <u>H</u> | 0.235 | 1.60 | <u>1.43</u> | 0.012 | 0.0019 | 0.029 | 0.0035 | 0.0007 | - | - | - | 0.021 | - | - | - |
| I | 0.185 | 1.26 | <u>4.12</u> | 0.010 | 0.0020 | 0.041 | 0.0041 | 0.0010 | - | - | 0.035 | - | - | - | - |
| <u>J</u> | <u>0.482</u> | 1.32 | 2.15 | 0.006 | 0.0015 | 0.036 | 0.0038 | 0.0020 | - | - | - | - | - | - | - |
| <u>K</u> | <u>0.143</u> | 1.15 | 3.10 | 0.007 | 0.0012 | 0.055 | 0.0059 | 0.0042 | - | - | - | - | - | - | - |
| L | 0.298 | 1.54 | 2.65 | 0.013 | 0.0009 | 0.039 | 0.0035 | 0.0006 | - | - | - | - | - | - | 0.220 |
| <u>M</u> | 0.252 | <u>3.05</u> | 2.22 | 0.015 | 0.0015 | 0.032 | 0.0051 | 0.0050 | - | - | - | - | - | - | - |
| <u>N</u> | 0.248 | <u>0.41</u> | 2.63 | 0.018 | 0.0015 | 0.083 | 0.0034 | 0.0030 | - | - | - | - | - | - | - |
| O | 0.305 | 1.51 | 2.55 | 0.008 | 0.0009 | 0.032 | 0.0041 | 0.0004 | - | - | - | - | - | - | - |
| P | 0.272 | 1.25 | 2.42 | 0.006 | 0.0009 | 0.041 | 0.0038 | 0.0006 | - | - | - | - | - | - | - |
| Q | 0.223 | 1.42 | 2.83 | 0.009 | 0.0009 | 0.054 | 0.0042 | 0.0006 | - | - | - | - | - | - | - |
| R | 0.212 | 1.51 | 2.85 | 0.010 | 0.0009 | 0.042 | 0.0051 | 0.0006 | - | - | - | - | - | - | - |
| S | 0.225 | 1.35 | 2.72 | 0.005 | 0.0009 | 0.053 | 0.0034 | 0.0006 | - | 0.091 | - | - | - | - | - |
| T | 0.220 | 0.55 | 2.62 | 0.015 | 0.0016 | 0.029 | 0.0052 | 0.0015 | - | - | - | - | - | - | - |
| U | 0.225 | 2.75 | 2.65 | 0.016 | 0.0014 | 0.091 | 0.0041 | 0.0016 | - | - | - | - | - | - | - |
| V | 0.305 | 0.64 | 2.65 | 0.012 | 0.0011 | 0.041 | 0.0092 | 0.0004 | - | - | - | - | - | - | - |
| W | 0.231 | 1.26 | 3.86 | 0.010 | 0.0020 | 0.059 | 0.0038 | 0.0006 | - | - | - | - | - | - | - |
| X | 0.235 | 1.32 | 1.65 | 0.015 | 0.0016 | 0.049 | 0.0025 | 0.0004 | - | - | - | - | - | - | - |

Table 1 (2/2)

| Steel ID | Sb | Sn | Zr | Cu | Ni | Ca | Mg | Co | Ta | REM | Hf | Te | Bi | Ms [°C] |
|---|---|---|---|---|---|---|---|---|---|---|---|---|---|---|
| | | | | | | | Chemical composition [mass%] | | | | | | | |
| A | - | - | - | - | - | - | - | - | - | - | - | - | - | 353 |
| B | 0.009 | - | - | - | - | - | - | - | - | - | - | - | - | 350 |
| C | - | - | - | - | - | - | - | - | - | - | - | - | - | 348 |
| D | - | - | - | - | - | - | - | - | - | - | - | - | - | 353 |
| E | - | - | - | - | - | - | - | - | - | - | - | - | - | 403 |
| F | - | - | - | 0.115 | - | - | - | - | - | - | - | - | - | 349 |
| G | - | - | - | - | - | - | - | - | - | - | - | - | - | 373 |
| H | - | - | - | - | - | - | - | - | - | - | - | - | - | 411 |
| I | - | - | - | - | - | - | - | - | - | - | - | - | - | 322 |
| J | - | - | - | - | - | - | - | - | - | - | - | - | - | 296 |
| K | - | - | - | - | - | - | - | - | - | - | - | - | - | 378 |
| L | 0.015 | - | - | - | - | - | - | - | - | - | - | - | - | 336 |
| M | - | - | - | - | - | - | - | - | - | - | - | - | - | 374 |
| N | - | - | - | - | - | - | - | - | - | - | - | - | - | 360 |
| O | - | 0.010 | 0.0220 | - | - | - | - | - | - | - | - | - | - | 342 |
| P | - | - | - | 0.211 | 0.125 | - | - | - | - | - | - | - | - | 355 |
| Q | - | - | - | - | - | 0.0012 | 0.0020 | - | - | - | - | - | - | 360 |
| R | - | - | - | - | - | - | - | 0.005 | - | - | - | - | - | 363 |
| S | - | - | - | - | - | - | - | - | 0.03 | 0.0010 | - | - | - | 364 |
| T | - | - | - | - | - | - | - | - | - | - | 0.03 | 0.005 | - | 369 |
| U | - | - | - | - | - | - | - | - | - | - | - | - | - | 368 |
| V | - | - | - | - | - | - | - | - | - | - | - | - | - | 338 |
| W | - | - | - | 0.360 | - | - | - | - | - | - | - | - | 0.013 | 313 |
| X | - | - | - | - | - | - | - | - | - | - | - | - | 0.004 | 403 |

[Table 2]

Table 2 (1/2)

| No. | Steel ID | Hot rolling | | Cold rolling | Heat treatment | First cooling | | Second cooling | Galvanizing treatment | Third cooling | | Re-heat treatment | Fourth cooling | | Remarks |
|---|---|---|---|---|---|---|---|---|---|---|---|---|---|---|---|
| | | Steel slab heating temperature [°C] | Finish rolling end temperature [°C] | Rolling rate [%] | Heating temperature T1 [°C] | T2 [°C] | Average cooling rate $v_1$ from T1 to T2 [°C/s] | Average cooling rate $v_2$ in Temperature range T3 [°C/s] | | Cooling stop temperature T4 [°C] | Number of times of bending-and-bending back process | Re-heating temperature T5 [°C] | T6 [°C] | Retaining time t6 at T6 [s] | |
| 1 | A | 1250 | 900 | 45 | 870 | 500 | 18 | 2.5 | GA | 200 | 2 | 355 | 345 | 60 | Compatible steel |
| 2 | A | 1250 | 900 | 46 | 875 | 510 | 17 | 2.3 | GA | 150 | 2 | 350 | 340 | 55 | Compatible steel |
| 3 | A | 1250 | 900 | 45 | 875 | 500 | 16 | 2.6 | GI | 190 | 2 | 320 | 315 | 65 | Compatible steel |
| 4 | A | 1250 | 900 | 45 | 960 | 500 | 16 | 2.6 | GA | 200 | 2 | 355 | 340 | 55 | Comparative steel |
| 5 | A | 1250 | 900 | 45 | 780 | 500 | 15 | 2.6 | GA | 205 | 2 | 355 | 345 | 55 | Comparative steel |
| 6 | B | 1250 | 900 | 50 | 880 | 520 | 19 | 2.0 | GA | 190 | 1 | 340 | 335 | 70 | Compatible steel |
| 7 | B | 1250 | 900 | 50 | 880 | 520 | 18 | 2.1 | GA | 190 | 3 | 340 | 330 | 75 | Compatible steel |
| 8 | B | 1250 | 900 | 50 | 880 | 520 | 18 | 2.1 | GA | 190 | 1 | 320 | 310 | 70 | Compatible steel |
| 9 | B | 1250 | 900 | 45 | 880 | 520 | 7 | 2.2 | GA | 190 | 1 | 340 | 330 | 75 | Comparative steel |
| 10 | C | 1250 | 900 | 45 | 870 | 480 | 16 | 1.5 | GA | 200 | 2 | 350 | 340 | 60 | Compatible steel |
| 11 | C | 1250 | 900 | 45 | 870 | 480 | 16 | 0 | GA | 200 | 2 | 355 | 340 | 60 | Comparative steel |

Table 2 (1/2)

| No. | Steel ID | Hot rolling | | Cold rolling | Heat treatment | First cooling | | Second cooling | Galvanizing treatment | Third cooling | | Re-heat treatment | Fourth cooling | | Remarks |
|---|---|---|---|---|---|---|---|---|---|---|---|---|---|---|---|
| | | Steel slab heating temperature [°C] | Finish rolling end temperature [°C] | Rolling rate [%] | Heating temperature T1 [°C] | T2 [°C] | Average cooling rate v$_1$ from T1 to T2 [°C/s] | Average cooling rate v$_2$ in Temperature range T3 [°C/s] | | Cooling stop temperature T4 [°C] | Number of times of bending-and-bending back process | Re-heating temperature T5 [°C] | T6 [°C] | Retaining time t6 at T6 [s] | |
| 12 | C | 1250 | 900 | 45 | 870 | 480 | 16 | 8.0 | GA | 200 | 2 | 355 | 340 | 60 | Comparative steel |
| 13 | C | 1250 | 900 | 45 | 870 | 480 | 15 | 1.9 | GA | 40 | 2 | 370 | 350 | 60 | Comparative steel |
| 14 | C | 1250 | 900 | 45 | 870 | 480 | 15 | 2.0 | GA | 360 | 2 | 370 | 350 | 60 | Comparative steel |
| 15 | D | 1250 | 900 | 50 | 880 | 490 | 16 | 3.5 | GA | 250 | 3 | 340 | 330 | 70 | Compatible steel |
| 16 | E | 1250 | 900 | 50 | 880 | 550 | 15 | 3.2 | GA | 200 | 1 | 330 | 325 | 70 | Compatible steel |
| 17 | F | 1250 | 900 | 50 | 880 | 490 | 20 | 2.5 | GA | 195 | 1 | 345 | 340 | 60 | Compatible steel |
| 18 | F | 1250 | 900 | 50 | 880 | 490 | 20 | 2.5 | GA | 195 | 1 | 520 | 500 | 60 | Comparative steel |
| 19 | F | 1250 | 900 | 50 | 880 | 490 | 20 | 2.5 | GA | 195 | 1 | 345 | 345 | 60 | Comparative steel |
| 20 | F | 1250 | 900 | 50 | 880 | 490 | 20 | 2.5 | GA | 195 | 1 | 345 | 360 | 60 | Comparative steel |
| 21 | F | 1250 | 900 | 50 | 880 | 490 | 20 | 2.6 | GA | 195 | 5 | 345 | 340 | 60 | Compatible steel |

EP 4 560 037 A1

| No. | Steel ID | Hot rolling | | Cold rolling | Heat treatment | First cooling | | Second cooling | Galvanizing treatment | Third cooling | | Re-heat treatment | Fourth cooling | | Remarks |
|---|---|---|---|---|---|---|---|---|---|---|---|---|---|---|---|
| | | Steel slab heating temperature [°C] | Finish rolling end temperature [°C] | Rolling rate [%] | Heating temperature T1 [°C] | T2 [°C] | Average cooling rate $v_1$ from T1 to T2 [°C/s] | Average cooling rate $v_2$ in Temperature range T3 [°C/s] | | Cooling stop temperature T4 [°C] | Number of times of bending-and-bending back process | Re-heating temperature T5 [°C] | T6 [°C] | Retaining time t6 at T6 [s] | |
| 22 | G | 1250 | 900 | 50 | 880 | 530 | 22 | 4.2 | GA | 190 | 1 | 350 | 330 | 90 | Compatible steel |
| 23 | G | 1250 | 900 | 50 | 880 | 530 | 22 | 4.2 | GA | 190 | 0 | 350 | 345 | 90 | Comparative steel |
| 24 | G | 1250 | 900 | 50 | 880 | 530 | 22 | 4.2 | GA | 190 | 1 | 350 | 330 | 0 | Comparative steel |
| 25 | G | 1250 | 900 | 50 | 880 | 530 | 22 | 4.2 | GA | 190 | 1 | 350 | 330 | 220 | Comparative steel |
| 26 | H | 1250 | 900 | 45 | 870 | 520 | 16 | 3.1 | GA | 200 | 3 | 320 | 310 | 20 | Comparative steel |
| 27 | I | 1250 | 900 | 50 | 880 | 530 | 15 | 3.1 | GA | 210 | 3 | 320 | 310 | 20 | Comparative steel |
| 28 | J | 1250 | 900 | 45 | 870 | 510 | 16 | 3.2 | GA | 220 | 3 | 320 | 300 | 20 | Comparative steel |
| 29 | K | 1250 | 900 | 50 | 880 | 530 | 17 | 3.2 | GA | 250 | 3 | 320 | 305 | 20 | Comparative steel |
| 30 | L | 1250 | 900 | 50 | 880 | 550 | 13 | 1.9 | GA | 200 | 1 | 330 | 320 | 180 | Compatible steel |
| 31 | M | 1250 | 900 | 50 | 880 | 500 | 15 | 1.8 | GA | 200 | 1 | 340 | 330 | 60 | Comparative steel |
| 32 | N | 1250 | 900 | 50 | 880 | 500 | 15 | 1.8 | GA | 200 | 1 | 340 | 330 | 60 | Comparative steel |
| 33 | O | 1250 | 900 | 50 | 865 | 540 | 14 | 2.2 | GA | 200 | 1 | 330 | 320 | 160 | Compatible steel |

(continued)

| No. | Steel ID | Hot rolling | | Cold rolling | Heat treatment | First cooling | | Second cooling | Galvanizing treatment | Third cooling | | Re-heat treatment | Fourth cooling | | Remarks |
|---|---|---|---|---|---|---|---|---|---|---|---|---|---|---|---|
| | | Steel slab heating temperature [°C] | Finish rolling end temperature [°C] | Rolling rate [%] | Heating temperature T1 [°C] | T2 [°C] | Average cooling rate v₁ from T1 to T2 [°C/s] | Average cooling rate v₂ in Temperature range T3 [°C/s] | | Cooling stop temperature T4 [°C] | Number of times of bending-and-bending back process | Re-heating temperature T5 [°C] | T6 [°C] | Retaining time t6 at T6 [s] | |
| 34 | P | 1250 | 900 | 45 | 870 | 490 | 20 | 2.5 | GI | 200 | 4 | 340 | 330 | 60 | Compatible steel |
| 35 | Q | 1250 | 900 | 50 | 880 | 510 | 19 | 2.5 | GI | 190 | 2 | 340 | 330 | 70 | Compatible steel |
| 36 | R | 1250 | 900 | 50 | 880 | 520 | 16 | 2.2 | GI | 190 | 1 | 320 | 300 | 70 | Compatible steel |
| 37 | s | 1250 | 900 | 50 | 880 | 520 | 16 | 1.8 | GA | 200 | 1 | 320 | 300 | 70 | Compatible steel |
| 38 | T | 1250 | 900 | 50 | 880 | 510 | 20 | 2.2 | GA | 200 | 2 | 340 | 330 | 70 | Compatible steel |
| 39 | U | 1250 | 900 | 45 | 870 | 520 | 16 | 2.0 | GA | 200 | 2 | 320 | 310 | 70 | Compatible steel |
| 40 | v | 1250 | 900 | 45 | 870 | 540 | 14 | 2.5 | GA | 200 | 3 | 330 | 315 | 150 | Compatible steel |
| 41 | W | 1250 | 900 | 45 | 870 | 500 | 18 | 2.0 | GI | 200 | 3 | 350 | 330 | 60 | Compatible steel |
| 42 | X | 1250 | 900 | 45 | 870 | 550 | 18 | 2.1 | GI | 200 | 3 | 350 | 340 | 55 | Compatible steel |

[Table 3]

| Table 3 (1/2) | | | | | | | | | | |
|---|---|---|---|---|---|---|---|---|---|---|
| No. | Microstructure | | | Amount of diffusible hydrogen in steel [mass ppm] | YS [MPa] | El [%] | $\lambda$ [%] | Collision proof stress | Crack stopping property | Remarks |
| | Total area fraction of tempered M and B [%] | Presence ratio (X/Y) | Area fraction of retained $\gamma$ [%] | | | | | | | |
| 1 | 82 | 1.5 | 11 | 0.24 | 1060 | 12.5 | 42 | A | A | Compatible steel |
| 2 | 86 | 1.3 | 9 | 0.20 | 1250 | 11.4 | 54 | A | A | Compatible steel |
| 3 | 83 | 1.6 | 10 | 0.22 | 1050 | 11.6 | 38 | A | A | Compatible steel |
| 4 | 96 | 2.7 | 11 | 0.72 | 1070 | 8.2 | 18 | C | A | Comparative steel |
| 5 | 50 | 1.4 | 5 | 0.20 | 980 | 13.2 | 22 | C | A | Comparative steel |
| 6 | 83 | 1.6 | 10 | 0.30 | 1065 | 12.8 | 40 | A | A | Compatible steel |
| 7 | 84 | 1.6 | 10 | 0.25 | 1068 | 12.9 | 41 | A | A | Compatible steel |
| 8 | 86 | 1.7 | 10 | 0.26 | 1055 | 12.6 | 39 | A | A | Compatible steel |
| 9 | 53 | 1.6 | 6 | 0.20 | 985 | 12.9 | 25 | C | A | Comparative steel |
| 10 | 86 | 1.7 | 12 | 0.26 | 1150 | 12.7 | 38 | A | A | Compatible steel |
| 11 | 85 | 1.7 | 13 | 0.69 | 1155 | 8.8 | 16 | C | A | Comparative steel |
| 12 | 49 | 1.6 | 6 | 0.25 | 960 | 11.5 | 22 | C | A | Comparative steel |
| 13 | 96 | 2.6 | 20 | 0.22 | 1250 | 7.8 | 16 | A | A | Comparative steel |
| 14 | 46 | 0.4 | 7 | 0.20 | 970 | 12.1 | 25 | C | C | Comparative steel |
| 15 | 57 | 0.9 | 5 | 0.30 | 1020 | 9.5 | 23 | B | B | Compatible steel |
| 16 | 80 | 1.2 | 28 | 0.25 | 1130 | 15.6 | 33 | B | B | Compatible steel |
| 17 | 85 | 1.7 | 12 | 0.25 | 1155 | 12.9 | 40 | A | A | Compatible steel |
| 18 | 80 | 1.4 | 3 | 0.35 | 1160 | 6.5 | 30 | A | A | Comparative steel |
| 19 | 78 | 0.4 | 6 | 0.31 | 1150 | 13.1 | 35 | A | C | Comparative steel |
| 20 | 78 | 0.3 | 6 | 0.32 | 1120 | 13.3 | 36 | A | C | Comparative steel |

(continued)

| | Microstructure | | | Amount of diffusible hydrogen in steel [mass ppm] | YS [MPa] | El [%] | λ [%] | Collision proof stress | Crack stopping property | Remarks |
|---|---|---|---|---|---|---|---|---|---|---|
| No. | Total area fraction of tempered M and B [%] | Presence ratio (X/Y) | Area fraction of retained γ [%] | | | | | | | |
| 21 | 83 | 1.7 | 12 | 0.05 | 1160 | 13.1 | 45 | A | A | Compatible steel |

| | Microstructure | | | Amount of diffusible hydrogen in steel [mass ppm] | YS [MPa] | El [%] | λ [%] | Collision proof stress | Crack stopping property | Remarks |
|---|---|---|---|---|---|---|---|---|---|---|
| No. | Total area fraction of tempered M and B [%] | Presence ratio (X/Y) | Area fraction of retained γ [%] | | | | | | | |
| 22 | 79 | 1.2 | 12 | 0.21 | 1020 | 13.4 | 50 | A | A | Compatible steel |
| 23 | 80 | 1.2 | 12 | 0.79 | 1020 | 8.6 | 18 | C | A | Comparative steel |
| 24 | 78 | 2.6 | 6 | 0.20 | 1050 | 8.4 | 17 | A | A | Comparative steel |
| 25 | 76 | 0.4 | 8 | 0.25 | 1010 | 12.2 | 35 | A | C | Comparative steel |
| 26 | 52 | 0.9 | 5 | 0.15 | 905 | 9.2 | 21 | C | B | Comparative steel |
| 27 | 72 | 2.8 | 6 | 0.16 | 1005 | 7.5 | 16 | A | A | Comparative steel |
| 28 | 94 | 2.9 | 16 | 0.34 | 1300 | 8.5 | 12 | A | A | Comparative steel |
| 29 | 43 | 1.0 | 5 | 0.25 | 760 | 12.5 | 34 | C | A | Comparative steel |
| 30 | 90 | 1.7 | 17 | 0.34 | 1200 | 15.2 | 30 | A | A | Compatible steel |
| 31 | 56 | 0.6 | 32 | 0.21 | 1010 | 8.2 | 18 | A | A | Comparative steel |
| 32 | 65 | 0.4 | 4 | 0.25 | 1020 | 6.8 | 22 | A | C | Comparative steel |
| 33 | 88 | 1.6 | 16 | 0.35 | 1180 | 14.8 | 32 | A | A | Compatible steel |
| 34 | 81 | 1.5 | 13 | 0.12 | 1170 | 13.8 | 44 | A | A | Compatible steel |
| 35 | 78 | 1.5 | 9 | 0.35 | 1055 | 12.2 | 44 | A | A | Compatible steel |
| 36 | 83 | 1.6 | 11 | 0.25 | 1035 | 13.2 | 36 | A | A | Compatible steel |
| 37 | 80 | 1.5 | 9 | 0.20 | 1025 | 11.9 | 42 | A | A | Compatible steel |

Table 3 (1/2)

(continued)

| No. | Microstructure | | | Amount of diffusible hydrogen in steel [mass ppm] | YS [MPa] | El [%] | $\lambda$ [%] | Collision proof stress | Crack stopping property | Remarks |
|---|---|---|---|---|---|---|---|---|---|---|
| | Total area fraction of tempered M and B [%] | Presence ratio (X/Y) | Area fraction of retained $\gamma$ [%] | | | | | | | |
| 38 | 80 | 1.3 | 7 | 0.36 | 1045 | 11.5 | 445 | A | B | Compatible steel |
| 39 | 80 | 1.4 | 26 | 0.34 | 1020 | 9.2 | 25 | A | B | Compatible steel |
| 40 | 85 | 1.4 | 11 | 0.29 | 1150 | 9.6 | 28 | A | B | Compatible steel |
| 41 | 83 | 1.6 | 11 | 0.22 | 1050 | 9.9 | 30 | A | A | Compatible steel |
| 42 | 65 | 0.9 | 8 | 0.25 | 1010 | 10.6 | 32 | B | B | Compatible steel |

<Summary of Evaluation Results>

As shown in Tables 1 to 3 above, the steel sheets of Nos. 1 to 3, 6 to 8, 10, 15 to 17, 21, 22, 30, and 33 to 42 all had yield strengths of not less than 1,000 MPa and were excellent in the workability, the collision proof stress, and the crack stopping property.

In contrast, the steel sheets of Nos. 4, 5, 9, 11 to 14, 18 to 20, 23 to 29, 31, and 32 were insufficient in at least one of the yield strength, the workability, the collision proof stress, and the crack stopping property.

**Claims**

1.  A high strength galvanized steel sheet comprising a steel sheet, and a galvanizing layer disposed on at least one surface of the steel sheet,

    wherein a yield strength is not less than 1,000 MPa,
    an amount of diffusible hydrogen in steel of the steel sheet is not more than 0.60 mass ppm,
    the steel sheet has chemical composition and microstructure,
    the chemical composition including, by mass,
    C in an amount of 0.150 to 0.450%,
    Si in an amount of 0.50 to 3.00%,
    Mn in an amount of 1.50 to 4.00%,
    P in an amount of not more than 0.100%,
    S in an amount of not more than 0.0200%,
    Al in an amount of not more than 0.100%,
    O in an amount of not more than 0.0100%, and
    N in an amount of not more than 0.0100%, with a balance being Fe and inevitable impurities,
    in the microstructure,
    a total area fraction of tempered martensite and bainite is 55 to 95%,
    an area fraction of retained austenite is 5 to 30%, and
    a presence ratio X/Y of a structure X to a structure Y is 0.5 to 2.5, the structure X having a nanohardness of 7.0 GPa or more, and the structure Y having a nanohardness of 6.5 GPa or less.

2.  The high strength galvanized steel sheet according to claim 1, wherein the chemical composition further includes at least one element selected from the group consisting of, by mass,

    B in an amount of not more than 0.0100%,

Ti in an amount of not more than 0.200%,
Nb in an amount of not more than 0.200%,
V in an amount of not more than 0.200%,
W in an amount of not more than 0.100%,
Mo in an amount of not more than 1.000%,
Cr in an amount of not more than 1.000%,
Sb in an amount of not more than 0.200%,
Sn in an amount of not more than 0.200%,
Zr in an amount of not more than 0.1000%,
Te in an amount of not more than 0.100%,
Cu in an amount of not more than 1.000%,
Ni in an amount of not more than 1.000%,
Ca in an amount of not more than 0.0100%,
Mg in an amount of not more than 0.0100%,
REM in an amount of not more than 0.0100%;
Co in an amount of not more than 0.010%,
Ta in an amount of not more than 0.10%,
Hf in an amount of not more than 0.10%, and
Bi in an amount of not more than 0.200%.

3.  A method of producing the high strength galvanized steel sheet according to claim 1 or 2, the method comprising:

    subjecting a steel slab having the chemical composition according to claim 1 or 2 to hot rolling to obtain a hot rolled steel sheet;
    subjecting the hot rolled steel sheet to cold rolling to obtain a cold rolled steel sheet;
    subjecting the cold rolled steel sheet to a heat treatment, first cooling, second cooling, and a galvanizing treatment in this order to obtain a galvanized steel sheet; and
    subjecting the galvanized steel sheet to third cooling, a re-heat treatment, and fourth cooling in this order;
    wherein in the heat treatment, the cold rolled steel sheet is heated at a heating temperature T1 of 800°C to 950°C,
    in the first cooling, the cold rolled steel sheet is cooled from the heating temperature T1 to a temperature T2 not lower than (Ms point + 100)°C and not higher than (Ms point + 600)°C at an average cooling rate $v_1$ of not lower than 10°C/s,
    in the second cooling, the cold rolled steel sheet is cooled while an average cooling rate $v_2$ in a temperature range T3 of not lower than Ms point and not higher than (Ms point + 100)°C is 0.1 to 5.0°C/s,
    in the third cooling, the galvanized steel sheet is cooled to a cooling stop temperature T4 of 50°C to 350°C, while bending-and-bending back process is performed at least once in the course of the third cooling,
    in the re-heat treatment, the galvanized steel sheet is re-heated to a re-heating temperature T5 not higher than 500°C and is re-cooled without being retained at the re-heating temperature T5, and
    in the fourth cooling, the galvanized steel sheet is retained at a temperature T6 lower than the re-heating temperature T5 for 1 to 200 s.

4.  A member obtained by using the high strength galvanized steel sheet according to claim 1 or 2.

5.  A method of producing a member, the method comprising subjecting the high strength galvanized steel sheet according to claim 1 or 2 to at least one of a forming process and a joining process to obtain a member.

# FIG. 1

# FIG. 2A

# FIG. 2B

## INTERNATIONAL SEARCH REPORT

International application No.

**PCT/JP2023/027130**

| A. | CLASSIFICATION OF SUBJECT MATTER |
|---|---|

*C22C 38/00*(2006.01)i; *C21D 9/46*(2006.01)i; *C22C 38/06*(2006.01)i; *C22C 38/60*(2006.01)i
FI:    C22C38/00 301T; C22C38/06; C22C38/60; C21D9/46 J

According to International Patent Classification (IPC) or to both national classification and IPC

| B. | FIELDS SEARCHED |
|---|---|

Minimum documentation searched (classification system followed by classification symbols)

C22C38/00-38/60; C21D8/02; C21D9/46;

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| A | WO 2018/147400 A1 (JFE STEEL CORP) 16 August 2018 (2018-08-16)<br>claims, tables 1-1-3-2 | 1-5 |
| A | JP 2020-509199 A (ARCELORMITTAL) 26 March 2020 (2020-03-26)<br>claims, tables 1-4 | 1-5 |
| A | JP 2019-534941 A (BAOSHAN IRON & STEEL CO., LTD.) 05 December 2019<br>(2019-12-05)<br>claims, tables 1-3 | 1-5 |
| A | WO 2019/212045 A1 (NIPPON STEEL CORPORATION) 07 November 2019 (2019-11-07)<br>claims, paragraphs [0002]-[0004], [0016]-[0017] | 1-5 |
| A | WO 2019/212047 A1 (NIPPON STEEL CORPORATION) 07 November 2019 (2019-11-07)<br>claims, paragraphs [0002]-[0004], [0016]-[0017] | 1-5 |
| A | WO 2015/019557 A1 (JFE STEEL CORP) 12 February 2015 (2015-02-12)<br>claims, tables 1-3 | 1-5 |

☑ Further documents are listed in the continuation of Box C.     ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **05 October 2023** | **17 October 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**

| International application No. |
| --- |
| **PCT/JP2023/027130** |

**C.    DOCUMENTS CONSIDERED TO BE RELEVANT**

| Category* | Citation of document, with indication, where appropriate, of the relevant passages | Relevant to claim No. |
| --- | --- | --- |
| P, A | WO 2022/185804 A1 (JFE STEEL CORP) 09 September 2022 (2022-09-09) claims, tables 1-3 | 1-5 |
| P, A | WO 2022/215389 A1 (JFE STEEL CORP) 13 October 2022 (2022-10-13) claims, tables 1-4 | 1-5 |

Form PCT/ISA/210 (second sheet) (January 2015)

## EP 4 560 037 A1

### INTERNATIONAL SEARCH REPORT
Information on patent family members

International application No.

**PCT/JP2023/027130**

| Patent document cited in search report | | | Publication date (day/month/year) | Patent family member(s) | | | Publication date (day/month/year) |
|---|---|---|---|---|---|---|---|
| WO | 2018/147400 | A1 | 16 August 2018 | EP | 3581670 | A1 | |
| | | | | claims, tables 1-1-3-2 | | | |
| | | | | US | 2020/0040420 | A1 | |
| | | | | CN | 110312813 | A | |
| JP | 2020-509199 | A | 26 March 2020 | WO | 2018/116155 | A1 | |
| | | | | claims, tables 1-4 | | | |
| | | | | US | 2019/0338385 | A1 | |
| | | | | CN | 110088342 | A | |
| JP | 2019-534941 | A | 05 December 2019 | EP | 3533894 | A1 | |
| | | | | claims, tables 1-3 | | | |
| | | | | US | 2019/0256945 | A1 | |
| | | | | WO | 2018/076965 | A1 | |
| | | | | CN | 108018484 | A | |
| WO | 2019/212045 | A1 | 07 November 2019 | US | 2021/0155999 | A1 | |
| | | | | claims, paragraphs [0003]-[0005], [0023]-[0024] | | | |
| | | | | CN | 112041475 | A | |
| WO | 2019/212047 | A1 | 07 November 2019 | US | 2021/0230712 | A1 | |
| | | | | claims, paragraphs [0003]-[0005], [0023]-[0024] | | | |
| | | | | CN | 112074620 | A | |
| WO | 2015/019557 | A1 | 12 February 2015 | EP | 3012339 | A1 | |
| | | | | claims, tables 1-3 | | | |
| | | | | US | 2016/0177427 | A1 | |
| | | | | CN | 105452513 | A | |
| | | | | JP | 2015-34326 | A | |
| WO | 2022/185804 | A1 | 09 September 2022 | (Family: none) | | | |
| WO | 2022/215389 | A1 | 13 October 2022 | (Family: none) | | | |

Form PCT/ISA/210 (patent family annex) (January 2015)

**REFERENCES CITED IN THE DESCRIPTION**

**Patent documents cited in the description**

- WO 2017164346 A